# EUROPÄISCHE PATENTSCHRIFT

(11) **EP 3 538 382 B1**
(45) Veröffentlichungstag und Bekanntmachung des Hinweises auf die Patenterteilung: **19.08.2020**
(21) Anmeldenummer: 17754720.5
(22) Anmeldetag: 22.08.2017
(51) Int. Cl.: B60C 11/04, B60C 11/13, B60C 11/03

(54) **FAHRZEUGLUFTREIFEN**
PNEUMATIC TIRE
PNEUMATIQUE

(30) Priorität: 09.11.2016 DE 102016221954
(43) Veröffentlichungstag der Anmeldung: 18.09.2019
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2017/071064
(87) Internationale Veröffentlichungsnummer: WO 2018/086777

(56) Entgegenhaltungen:
- EP-A1- 2 239 153
- WO-A2-01/00427
- JP-A- 2004 224 249

## Beschreibung

Die Erfindung betrifft ein Laufstreifenprofil eines Fahrzeugluftreifens - insbesondere eines PKW-Fahrzeugluftreifens - mit wenigstens einer Umfangsrippe, die in axialer Richtung A von einer ersten und einer zweiten Umfangsrillen begrenzt wird, wobei in der Umfangsrippe erste und zweite Rillen ausgebildet sind, die über den Umfang hinweg in Umfangsrichtung U alternierend hintereinander angeordnet sind, wobei die ersten und zweiten Rillen jeweils aus einem ersten und zweiten Rillenarm ausgebildet sind, die in einer Knickstelle der Rille miteinander verbunden sind, die im Abstand von beiden Umfangsrillen positioniert ist, wobei der erste Rillenarm der ersten Rillen jeweils in axialer Richtung A von der ersten Umfangsrille ausgehend bis zur Knickstelle der ersten Rille und der erste Rillenarm der zweiten Rillen jeweils in axialer Richtung A von der zweiten Umfangsrille ausgehend bis zur Knickstelle der zweiten Rille erstreckt ist.

Es ist bekannt, Pkw-Fahrzeugluftreifen zur Erzielung guter Trockenbrems- und Trockenhandling-Eigenschaften mit Umfangsrippen auszubilden, die von zwei Umfangsrillen begrenzt werden. Die Umfangsrippen sollen dabei eine hohe Steifigkeit in Umfangsrichtung und in Querrichtung sicherstellen, so dass hohe Umfangskräfte und Querkräfte zur Erzielung guter Trockenbremseigenschaften und Handling-Eigenschaften ermöglicht werden. Derartige Umfangsrippen erschweren jedoch die Abfuhr von Wasser aus dem Bodenaufstandsbereich der Umfangsrippe beim Abrollen des Reifens, wodurch die Aquaplaning-Eigenschaften des Fahrzeugluftreifens eingeschränkt sind.

Es ist auch bekannt, in derartige Umfangsrippen von PKW-Fahrzeugluftreifen zusätzlich Rillen auszubilden, durch welche Wasser aus dem Erstreckungsbereich der Umfangsrippe in die Umfangsrillen abgeleitet wird. Dabei ist es wünschenswert, zur Sicherstellung großer Aufnahmekapazität und schneller Ableitung möglichst breite tiefe Rillen über die gesamte axiale Breite der Rippe zu erstrecken und diese möglichst dicht hintereinander anzuordnen. Die Ausbildung derartiger Umfangsrippen mit Rillen reduziert jedoch die Steifigkeit der Umfangsrippe, wodurch die gewünschten Trockenbrems- und Trockenhandling-Eigenschaften beeinträchtigt werden. Je tiefer und breiter die Rillen und je höher die Dichte ihrer Anordnung ist, desto stärker wird die Steifigkeit reduziert.

Aus der DE 112009000913T5 ist es beispielsweise bekannt, derartige Fahrzeugluftreifen mit einer Umfangsrippe auszubilden, in der erste Rillen und zweite Rillen ausgebildet sind. Die ersten Rillen erstrecken sich von der einen Umfangsrille mit einem ersten Rillenarm in die Umfangsrippe hinein bis zu einer Knickstelle. Die zweiten Rillen erstrecken sich mit einem ersten Rillenarm von der zweiten Umfangsrille in die Umfangsrippe hinein ebenfalls bis zu einer Knickstelle. Beide Rillen erstrecken sich im Anschluss an die Knickstelle mit einem zweiten Arm im Wesentlichen in Umfangsrichtung und enden in der Umfangsrippe stumpf. Ausgehend von der Knickstelle bis zu ihrem Erstreckungsende sind die zweiten Arme dabei mit entgegengesetzter Umfangsorientierung ausgerichtet. Über den Umfang des Reifens hinweg sind die beiden Rillen in alternierender Abfolge verteilt angeordnet. Die Knickstellen der ersten Rillen sind dabei in axialer Richtung A gesehen zwischen der der ersten Rille zugeordneten Umfangsrille und der Knickstelle der zweiten Rille positioniert, ebenso sind die Knickstellen der zweiten Rillen in axialer Richtung A zwischen der den zweiten Rillen zugeordneten zweiten Umfangsrille und den Knickstellen der ersten Rillen positioniert. Eine erste Rille und eine zweite Rille sind dabei so angeordnet, dass ihre zweiten Rillenarme parallel zueinander, nebeneinander erstreckt verlaufen. Die ersten und zweiten Rillen sind ohne axiale Überschneidung ausgebildet, und der jeweils zweite abgeknickte Arm endet ohne jegliche Anbindung in eine Umfangsrille. Bei dieser Ausführung ist somit trotz verbesserter Wasseraufnahme und Ableitung durch die Rillen noch eine lediglich beschränkte Aufnahme und Abführung von Wasser aus dem Erstreckungsbereich der Umfangsrippe ermöglicht. Zwischen den ersten und den zweiten Rillen verbleibt zentral ein fast geradlinig über den gesamten Umfang des Reifens erstrecktes, Rippenband bestehen, aus welchem jegliche Ableitung von Wasser erschwert ist. Dabei sind die zwischen den parallel im wesentlichen in Umfangsrichtung verlaufenden zweiten Erstreckungsarmen von zwei hintereinander angeordneten ersten und zweiten Rillen über einen relativ langen Umfangserstreckungsabschnitt ausgebildeten mittleren Rippenabschnitt dennoch so schmal ausgebildet, dass seine Steifigkeit gerade für Übertragung von Kräften in Querrichtung und somit für die wesentlichen Handling-Eigenschaften beschränkt ist. Somit kann diese bekannte Ausbildung nur eine beschränkte Aufnahme und Ableitung von Wasser bei beschränkten Handling-Eigenschaften umgesetzt werden. Gerade in dem wichtigen zentralen Abschnitt ist die Aufnahme von Wasser und deren Ableitung beschränkt. Die zusätzlich bei dieser Ausbildung in der Umfangsrippe ausgebildeten Feineinschnitte reduzieren darüber hinaus die Umfangssteifigkeit der Rippe.

**Auch aus der** WO 01/00427 A2 **ist die Ausbildung eines derartigen Laufstreifenprofiles eines Fahrzeugluftreifens gemäß den Merkmalen des Oberbegriffs des Patentanspruchs 1 bekannt.**

Der Erfindung liegt daher die Aufgabe zugrunde, bei einem derartigen Laufstreifenprofil mit einfachen Mitteln eine bessere Aquaplaning-Tauglichkeit mit hoher Steifigkeit der Umfangsrippe zur Erzielung guter Trockenbrems- und Handling-Eigenschaften zu ermöglichen.

Die Aufgabe wird erfindungsgemäß durch die Ausbildung eines Laufstreifenprofils eines Fahrzeugluftreifens - insbesondere eines PKW-Fahrzeugluftreifens - mit wenigstens einer Umfangsrippe, die in axialer Richtung A von einer ersten und einer zweiten Umfangsrillen begrenzt wird, wobei in der Umfangsrippe erste und zweite Rillen ausgebildet sind, die über den Umfang hinweg in Umfangsrichtung U alternierend hintereinander angeordnet sind, wobei die ersten und zweiten Rillen jeweils aus einem ersten und zweiten Rillenarm ausgebildet sind, die in einer Knickstelle der Rille miteinander verbunden sind, die im Abstand von beiden Umfangsrillen positioniert ist, wobei der erste Rillenarm der ersten Rillen jeweils in axialer Richtung A von der ersten Umfangsrille ausgehend bis zur Knickstelle der ersten Rille und der erste Rillenarm der zweiten Rillen jeweils in axialer Richtung A von der zweiten Umfangsrille ausgehend bis zur Knickstelle der zweiten Rille erstreckt ist, gemäß den Merkmalen von Anspruch 1 gelöst, bei dem der zweite Rillenarm der ersten Rillen jeweils in axialer Richtung A von der ersten Umfangsrille ausgehend bis zur Knickstelle der ersten Rille und der zweite Rillenarm der zweiten Rillen jeweils in axialer Richtung A von der zweiten Umfangsrille ausgehend bis zur Knickstelle der zweiten Rille erstreckt ist, bei dem der erste Rillenarm und der zweite Rillenarm der ersten Rille längs ihres Erstreckungsverlaufes von der ersten Umfangsrille zur Knickstelle mit zunehmender Umfangsrichtungskomponente entgegengesetzt zueinander gekrümmt verlaufend ausgebildet sind und bei dem der erste Rillenarm und der zweite Rillenarm der zweiten Rille längs ihres Erstreckungsverlaufes von der zweiten Umfangsrille zur Knickstelle mit zunehmender Umfangsrichtungskomponente entgegengesetzt zueinander gekrümmt verlaufend ausgebildet sind, und bei dem die Knickstelle der ersten Rille jeweils in einer axialen Position zwischen Knickstelle der zweiten Rillen und zweiter Umfangsrille und die Knickstelle der zweiten Rille jeweils in einer axialen Position zwischen Knickstelle der ersten Rillen und erster Umfangsrille angeordnet ist.

Durch diese Ausbildung wird ermöglicht, dass über die ersten und zweiten Arme beider Rillen große Mengen von Wasser auch im Erstreckungsbereich der Umfangsrippe aufgenommen und in die Umfangsrillen schnell abgeleitet werden kann. Die axiale Erstreckung der alternierend hintereinander angeordneten ersten und zweiten Rillen bis in eine Position, in der die Knickstelle zwischen der axialen Position der Knickstelle der jeweils anderen Rille und der Umfangsrille, in welche diese andere Rille mündet, liegt, ermöglicht durch die axiale Überschneidung der Rillen dabei eine große Wasseraufnahme und Ableitung über den gesamten axialen Erstreckungsbereich der Umfangsrippe, wobei gerade im axial zentralen Erstreckungsabschnitt der Umfangsrippe eine große wirksame Dichte an wirksamen Rillenabschnitten zur Aufnahme von Wasser gegeben ist und im axialen Randbereich der Umfangsrippe eine deutlich geringere Dichte. Die dabei gegenläufig gekrümmte Ausbildung der beiden Rillenarme mit zunehmender Umfangsrichtungskomponente zur jeweiligen Knickstelle hin ermöglicht dabei eine schnelle hochwirksame Aufnahme und Ableitung von Wasser gerade auch aus dem axial zentralen Erstreckungsbereich der Umfangsrippe und dabei eine hohe Steifigkeit der Umfangsrippe trotz hoher wirksamer Rillendichte. Dabei ist zwischen den ersten und zweiten Rillen dennoch ein durchgehend verbleibendes, s-förmiges Gummimaterialband sichergestellt und zwischen erstem und zweitem Arm eine Rille aufgrund der gegenläufigen Krümmung ein die Steifigkeit zusätzlich verstärkender Materialabschnitt der Umfangsrippe. Durch die Ausbildung kann das Wasser in beide Drehrichtungen des Reifens aus dem gesamten axialen Erstreckungsbereich der Umfangsrippe gut entwässert werden bei Sicherstellung einer hohen Steifigkeit der Umfangsrippe. Die doppelt gebogene Form der einzelnen Rille mit entgegengesetzter Krümmung ermöglicht mit ihrem Übergang von Umfangsrichtung in axiale Richtung darüber hinaus eine reduzierte Entstehung von Geräuschen beim Abrollen des Reifens, da innerhalb der Umfangsrippe trotz Ausbildung der Rillen das Entstehen von Kantenaufschlägen beim Abrollen des Fahrzeugluftreifens minimiert wird.

Besonders vorteilhaft ist die Ausbildung eines Fahrzeugreifens gemäß den Merkmalen von Anspruch 2, wobei die Knickstelle der ersten Rille in der radial äußeren Oberfläche der Umfangsrippe axial zwischen der zweiten Umfangsrille und der in axialer Richtung A gemessenen Breitenmitte der Umfangrippe positioniert ist und wobei die Knickstelle der zweiten Rille in der radial äußeren Oberfläche der Umfangsrippe axial zwischen der ersten Umfangsrille und der in axialer Richtung A gemessenen Breitenmitte der Umfangrippe positioniert ist. Hierdurch kann eine sehr gleichmäßige Unterteilung der Umfangsrippe umgesetzt werden, wodurch ein harmonisches Verhalten der Rippe ermöglicht wird. Dies wirkt sich positiv auf Geräuschbildung und die Gleichmäßigkeit des Abriebs aus.

Besonders vorteilhaft ist die Ausbildung eines Fahrzeugreifens gemäß den Merkmalen von Anspruch 3, wobei der erste Rillenarm einer Rille jeweils mit einer Länge L₁ und der zweite Rillenarm der Rille mit einer Länge L₂ mit L₁ < L₂ ausgebildet ist, wobei die Längen L₁ und L₂ jeweils den an der längeren Rillenwand der Rille in der radial äußeren Oberfläche der Umfangsrippe gemessenen Abstand zwischen Knickstelle und Einmündung des Rillenarms in die Umfangsrille angibt. Durch diese Ausbildung kann eine weitere Geräuschreduktion begünstigt werden.

Besonders vorteilhaft ist die Ausbildung eines Fahrzeugreifens gemäß den Merkmalen von Anspruch 4, wobei in Umfangsrichtung U gesehen die ersten Rillen jeweils aus einem ihrer Knickstelle vorgeordneten, ersten Rillenarm und einem ihrer Knickstelle nachgeordneten, zweiten Rillenarm und die zweiten Rillen mit entgegengesetzter Abfolge mit einem ihrer Knickstelle vorgeordneten, zweiten Rillenarm und einem ihrer Knickstelle nachgeordneten, ersten Rillenarm ausgebildet sind. Hierdurch kann eine weitere Vergleichmäßigung der durch die Rillen erfolgten Unterteilung der Umfangsrippe und somit eine weitere Begünstigung von weiter reduzierter Geräuschentwicklung und verbessertem Abrieb ermöglicht werden.

Besonders vorteilhaft ist die Ausbildung eines Fahrzeugreifens gemäß den Merkmalen von Anspruch 5, wobei der erste und der zweite Rillenarm einer Rille jeweils mit unterschiedlicher Tiefe ausgebildet sind. Durch diese Ausbildung kann im Rillenarm der geringeren Tiefe eine steife Anbindung des von der Rille und der Umfangsrille umschlossenen Gummimaterials der Umfangsrippe ermöglicht werden und durch den tieferen Rillenarm eine besonders wirkungsvolle Entwässerung sichergestellt werden. Hierdurch wird bei guter Entwässerung wirksam ungleichmäßigem Abrieb entgegengewirkt.

Besonders vorteilhaft ist die Ausbildung eines Fahrzeugreifens gemäß den Merkmalen von Anspruch 6, wobei der erste Rillenarm einer Rille jeweils über den Hauptteil seiner axialen Erstreckung bis zur Knickstelle mit einer Tiefe T₁ und der zweite Rillenarm längs seiner Erstreckung mit einer Tiefe T₂ mit T₁<T₂ ausgebildet ist. Durch diese Ausbildung kann im Rillenarm der geringeren Tiefe eine steife Anbindung des von der Rille und der Umfangsrille umschlossenen Gummimaterials der Umfangsrippe ermöglicht werden und durch den tieferen Rillenarm eine besonders wirkungsvolle Entwässerung sichergestellt werden. Hierdurch wird bei guter Entwässerung wirksam ungleichmäßigem Abrieb entgegengewirkt.

Besonders vorteilhaft ist die Ausbildung eines Fahrzeugreifens gemäß den Merkmalen von Anspruch 7, wobei der die Rille nach radial innen begrenzende Rillengrund im ersten Rillenarm längs ihrer axialen Erstreckung bis zur Knickstelle rampenförmig abfällt, wobei die Tiefe T₁ bis zur Knickstelle kontinuierlich zunimmt. Durch diese Ausbildung mit Rampe kann eine zur Umfangsrille hin ausgerichtete Steifigkeitszunahme sichergestellt werden, wodurch der für unregelmäßigen Abrieb besonders kritische Auslauf zur Umfangsrille hin stabilisiert wird. Hierdurch kann das Abriebbild weiter zusätzlich vergleichmäßigt werden.

Besonders vorteilhaft ist die Ausbildung eines Fahrzeugreifens gemäß den Merkmalen von Anspruch 8, wobei die Tiefe T₂ zumindest über den größten Teil der Erstreckung des zweiten Rillenarms konstant ist. Somit kann die Rille in ihrem zweiten Rillenarm längs seiner Erstreckung optimiert die Rillenfunktion - wie die Wasserableitung - sicherstellen, wodurch die Entwässerung aus dem Bereich der Umfangsrippe weiter verbessert wird.

Besonders vorteilhaft ist die Ausbildung eines Fahrzeugreifens gemäß den Merkmalen von Anspruch 9, wobei die Knickstellen der ersten Rillen in einem in axialer Richtung A gemessenen Abstand a von den Knickstellen der zweiten Rillen positioniert sind mit (1/6)B≤a≤(1/2)B, wobei B die in axialer Richtung A gemessene Breite der Umfangsrippe ist. Hierdurch kann in einfacher Weise die Umfangsrippe mit ausreichender Umfangssteifigkeit für gute Trockenbremseigenschaften bei ausreichender Flexibilität für niederen Rollwiderstand und guter Entwässerung umgesetzt werden.

Besonders vorteilhaft ist die Ausbildung eines Fahrzeugreifens gemäß den Merkmalen von Anspruch 10, wobei die kürzere Rillenwand des zweiten Rillenarmes einer Rille jeweils im Übergang zur radial äußeren Oberfläche mit einer Fase ausgebildet ist und wobei insbesondere sowohl die kürzere Rillenwand des ersten Rillenarmes einer Rille und als auch die längere Rillenwand in beiden Armen der Rille im Übergang zur radial äußeren Oberfläche jeweils ohne Fase ausgebildet sind. Hierdurch kann zusätzlich ein Einrollen des zwischen den beiden Rillenarmen im Bereich der Knickstelle spitz eingeschlossenen Gummimaterials vermieden werden, wodurch gute Trockenbremseigenschaften zusätzlich begünstigt werden.

Die Erfindung wird im Folgenden an Hand der in den Figuren 1 bis 8 dargestellten Ausführungsbeispiele näher erläutert. Hierin zeigen
- Fig.1: einen Umfangsabschnitt eines Fahrzeugluftreifens für Personenkraftwagen (Pkw) in Draufsicht,
- Fig.2: eine Umfangsrippe des Laufstreifenprofils von Fig.1 in vergrößerter Darstellung in Draufsicht,
- Fig.3: die Umfangsrippe von Fig.1 und Fig.2 in Schnittdarstellung gemäß Schnitt III-III von Fig.2,
- Fig.4: die Umfangsrippe von Fig.1 und Fig.2 in Schnittdarstellung gemäß Schnitt IV-IV von Fig.2,
- Fig.5: die Umfangsrippe von Fig.1 und Fig.2 in Schnittdarstellung gemäß Schnitt V-V von Fig.2,
- Fig.6: die Umfangsrippe von Fig.1 und Fig.2 in Schnittdarstellung gemäß Schnitt VI-VI von Fig.2,
- Fig.7: die Umfangsrippe von Fig.1 und Fig.2 in Schnittdarstellung gemäß Schnitt VII-VII von Fig.2 und
- Fig.8: die Umfangsrippe von Fig.1 und Fig.2 in Schnittdarstellung gemäß Schnitt VIII-VIII von Fig.2.

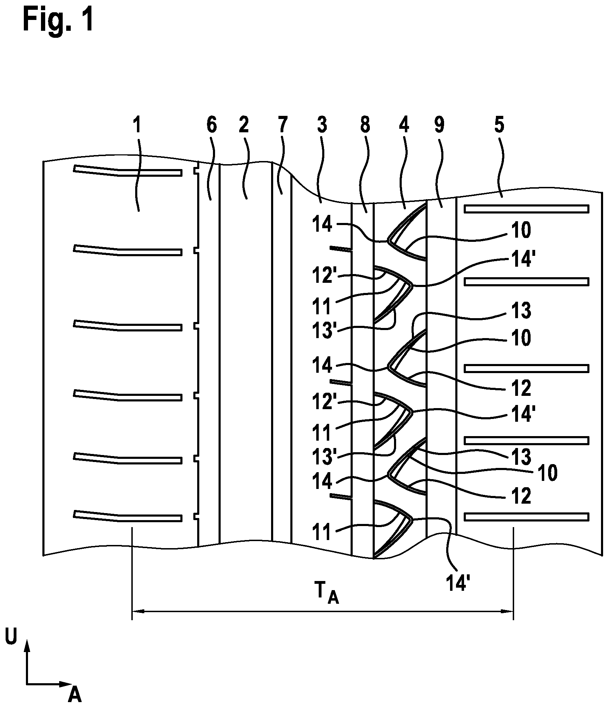

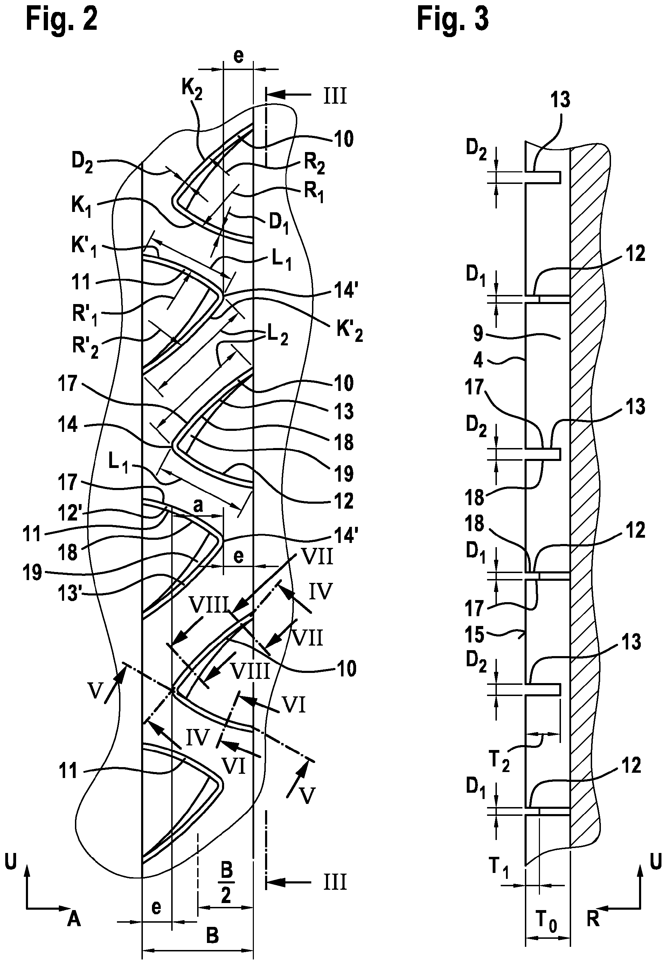

Die Figuren 1 und 2 zeigen ein Laufstreifenprofil eines Fahrzeugluftreifens eines Personenkraftwagens (Pkw) mit mehreren in axialer Richtung A nebeneinander angeordneten Profilbändern 1 bis 5, welche jeweils in axialer Richtung A durch Umfangsrillen 6, 7, 8 und 9 voneinander getrennt sind. Dabei sind die Profilbänder 1 und 5 jeweils in einer Reifenschulter ausgebildet Schulterprofilbänder bekannter Art, welche sich jeweils über den gesamten Umfang des Fahrzeugluftreifens in Umfangsrichtung U ausgerichtet erstrecken. Zwischen den beiden Profilbändern 1 und 5 sind die Profilbänder 2, 3 und ein als Umfangsrippe 4 ausgebildetes Profilband angeordnet. Das Profilband 2 ist über den gesamten Umfang des Fahrzeugluftreifens erstreckt ausgebildet und in Umfangsrichtung U ausgerichtet. Das Profilband 3 ist über den gesamten Umfang des Fahrzeugluftreifens erstreckt und in Umfangsrichtung U ausgerichtet. Die Umfangsrippe 4 ist über den gesamten Umfang des Fahrzeugluftreifens erstreckt und in Umfangsrichtung U ausgerichtet.

Die benachbarten Profilbänder 1 und 2 sind in bekannter Weise in axialer Richtung A durch eine Umfangsrille 6 voneinander getrennt, welche sich über den gesamten Umfang des Fahrzeugluftreifens erstreckt und in Umfangsrichtung U ausgerichtet ist. Die benachbarten Profilbänder 2 und 3 sind in bekannter Weise in axialer Richtung A durch eine Umfangsrille 7 voneinander getrennt ausgebildet, welche sich über den gesamten Umfang des Fahrzeugluftreifens erstreckt und in Umfangsrichtung U ausgerichtet ist. Das Profilband 3 und die zu diesem benachbarte Umfangsrippe 4 sind in bekannter Weise in axialer Richtung A durch eine über den gesamten Umfang des Fahrzeugluftreifens erstreckte und in Umfangsrichtung U ausgerichtete Umfangsrille 8 voneinander getrennt. Die Umfangsrippe 4 und das zu dieser benachbart angeordnete Profilband 5 sind in bekannter Weise in axialer Richtung A durch eine über den gesamten Umfang des Fahrzeugluftreifens erstreckte und in Umfangsrichtung U ausgerichtete Umfangsrille 9 getrennt.

Die Profilbänder 1, 2, 3 und 5 sind beispielsweise - wie in Fig.1 - dargestellt ist, als Umfangsrippen bekannter Art ausgebildet. In alternativer, nicht dargestellter Ausführung sind die Profilbänder 1, 2, 3 und 5 einzeln oder auch alle als Profilblockreihen bekannter Art ausgebildet.
In Fig.1 ist die Bodenaufstandsbreite T_{A} des Fahrzeugluftreifens im Normzustand eingetragen, welche sich aus dem axialen Erstreckungsbereich des Profilbandes 1 bis in den axialen Erstreckungsbereich des Profilbandes 5 erstreckt.

Die Profilbänder 1, 2, 3 und 5 sowie die Umfangsrippe 4 sind in radialer Richtung R nach außen hin durch eine die Straßenkontaktoberfläche bildende radiale äußere Oberfläche 15 begrenzt. Die Umfangsrillen 6, 7, 8 und 9 sind in bekannter Weise in radialer Richtung R nach innen hin durch einen über den gesamten Umfang des Fahrzeugluftreifens erstreckten Rillengrund begrenzt.

Die Umfangsrippe 4 ist in der radialen Position der radial äußeren Oberfläche 15 mit einer in axialer Richtung gemessenen Breite B ausgebildet.

Wie in den Figuren 1 und 2 dargestellt ist, sind in der Umfangsrippe 4 Rillen 10 und 11 ausgebildet, welche in Umfangsrichtung U des Fahrzeugluftreifens in alternierender Anordnung hintereinander und beabstandet zueinander positioniert sind. Die Rille 10 und die Rille 11 sind dabei jeweils beiderseits ihres Rillengrundes durch eine Rillenwand 17 bzw. 18 begrenzt, welche sich ausgehend vom Rillengrund 16 der jeweiligen Rille 10 bzw. 11 in radialer Richtung R nach außen hin bis zur radial äußeren Oberfläche 15 erstreckt.

Die Rillen 10 sind dabei jeweils aus einem ersten Rillenarm 12 und einem zweiten Rillenarm 13 und einer zwischen erstem Rillenarm 12 und zweitem Rillenarm 13 positionierten Knickstelle 14 ausgebildet. In analoger Weise sind die Rillen 11 jeweils aus einem ersten Rillenarm 12', einem zweiten Rillenarm 13' und einem zwischen erstem Rillenarm 12' und zweitem Rillenarm 13' positionierten Knickstelle 14' ausgebildet.
Der erste Rillenarm 12 und der zweite Rillenarm 13 der Rille 10 erstreckt sich dabei jeweils von der Knickstelle 14 in axialer Richtung A bis zur Umfangsrille 9 und mündet in diese. In analoger Weise erstreckt sich der erste Rillenarm 12' und der zweite Rillenarm 13' der Rille 11 von der Knickstelle 14' in axialer Richtung A bis zur Umfangsrille 8 und mündet in diese. Somit erstreckt sich der erste Rillenarm 12 der Rille 10 von der Umfangsrille 9 bis zur Knickstelle 14. Der zweite Rillenarm 13 erstreckt sich ebenfalls von der Umfangsrille 9 bis zur Knickstelle 14. In analoger Weise erstreckt sich der erste Rillenarm 12' der Rille 11 von der Umfangsrille 8 bis zur Knickstelle 14'. Ebenso erstreckt sich der zweite Rillenarm 13' der Rille 11 ausgehend von der Umfangsrille 8 in axialer Richtung bis zur Knickstelle 14'.

Die Rillenwand 17 der Rille 10 bildet dabei diejenige Rillenwand, die zwischen Umfangsrille 9 und Knickstelle 14 und zurück zur Umfangsrille 9 die längere Erstreckung in der radial äußeren Oberfläche 15 aufweist. Die Rillenwand 18 bildet diejenige Rillenwand, die die kürzere Erstreckung in der radial äußeren Oberfläche 15 aufweist. In analoger Weise bildet die Rillenwand 17 der Rille 11 die Rillenwand, die die längere Erstreckung in der radial äußeren Oberfläche 15 ausgehend von der Umfangsrille 8 über die Knickstelle 14' bis zur Umfangsrille 8 aufweist. Die Rillenwand 18 der Rille 11 bildet diejenige Rillenwand, die die kürzere Erstreckung in der radial äußeren Oberfläche aufweist.

Wie in Fig. 2 zu erkennen ist, ist der Rillenarm 12 und der Rillenarm 13 dabei in der radial äußeren Oberfläche 15 längs ihrer Erstreckung ausgehend von der Umfangsrille 9 bis zur Knickstelle 14 hin unter stetiger Zunahme ihrer jeweiligen Umfangsrichtungskomponente gekrümmt verlaufend ausgebildet.

Der erste Rillenarm 12 ist dabei mit einer Krümmungslinie K₁ seiner Rillenwand 17 in der radial äußeren Oberfläche 15 und der Arm 13 mit einer Krümmungslinie K₂ ausgebildet, wobei die Krümmungslinie K₁ mit einem Krümmungsradius R₁ um einen Krümmungsmittelpunkt M₁ ausgebildet ist, der in der Darstellung von Fig.2 auf der zum Rillenarm 13 hinweisenden Seite des Rillenarms 12 positioniert ist. Die Krümmungslinie K₂ ist mit ihrem Krümmungsradius R₂ um einen Mittelpunkt M₂ ausgebildet, der auf der vom Rillenarm 13 in Richtung zum Rillenarm 12 hinweisenden Seite positioniert ist. Die Rillenarme 12 und 13 sind somit gegensinnig gekrümmt ausgebildet.
In analoger Weise ist der Rillenarm 12' und der Rillenarm 13' in der radial äußeren Oberfläche 15 längs ihrer Erstreckung ausgehend von der Umfangsrille 8 bis zur Knickstelle 14' hin unter stetiger Zunahme ihrer jeweiligen Umfangsrichtungskomponente gekrümmt verlaufend ausgebildet.

Der erste Rillenarm 12' ist dabei mit einer Krümmungslinie K'₁ seiner Rillenwand 17 in der radial äußeren Oberfläche 15 und der Rillenarm 13' mit einer Krümmungslinie K'₂ ausgebildet, wobei die Krümmungslinie K'₁ mit einem Krümmungsradius R'₁ um einen Krümmungsmittelpunkt M'₁ ausgebildet ist, der in der Darstellung von Fig.2 auf der zum Rillenarm 13' hinweisenden Seite des Rillenarms 12' positioniert ist. Die Krümmungslinie K'₂ ist mit ihrem Krümmungsradius R'₂ um einen Mittelpunkt M'₂ ausgebildet, der auf der vom Rillenarm 13' in Richtung zum Rillenarm 12' hinweisenden Seite positioniert ist. Die Rillenarme 12' und 13' sind somit gegensinnig gekrümmt ausgebildet.

Der erste Rillenarm 12 bzw. 12' ist mit einer in der radial äußeren Oberfläche 15 gemessenen Erstreckungslänge L₁ und der zweite Rillenarm 13 bzw. 13' mit einer Erstreckungslänge L₂ mit L₂ > L₁ ausgebildet. Die Erstreckungslänge L₁ der Rille 10 bildet dabei den Abstand zwischen Knickstelle 14 der längeren Rillenwand 17 des ersten Rillenarms 12 der Rille 10 und der Einmündung dieser Rillenwand 17 des Rillenarms 12 in die Umfangsrille 9. Ebenso bildet L₂ der Rille 10 den Abstand zwischen Knickstelle 14 der längeren Rillenwand 17 des zweiten Rillenarms 13 der Rille 10 und der Einmündung dieser Rillenwand 17 der Rille 10 in die Umfangsrille 9. In analoger Weise bildet die Erstreckungslänge L₁ der Rille 11 den Abstand zwischen Knickstelle 14' der längeren Rillenwand 17 des ersten Rillenarms 12' der Rille 11 und der Einmündung dieser Rillenwand 17 des Rillenarms 12' in die Umfangsrille 8. Ebenso bildet L₂ der Rille 11 den Abstand zwischen Knickstelle 14' der längeren Rillenwand 17 des zweiten Rillenarms 13' der Rille 11 und der Einmündung dieser Rillenwand 17 der Rille 11 in die Umfangsrille 8.

Die Rille 10 erstreckt sich jeweils mit ihren beiden Rillenarmen 12 und 13 ausgehend von der Umfangsrille 9 in axialer Richtung A bis zur Knickstelle 14, deren axiale Position zwischen der axialen Position der Knickstelle 14' der Rillen 11 und der Umfangsrille 8 positioniert ist. In analoger Weise erstreckt sich die Rille 11 jeweils ausgehend von der Umfangsrille 8 in axialer Richtung A bis zur Knickstelle 14', welche in einer axialen Position zwischen der axialen Position der Knickstelle 14 der Rillen 10 und der Umfangsrille 9 positioniert ist.

Auf diese Weise erstrecken sich die Rillen 10 und 11 jeweils in axialer Richtung A über eine in axialer Richtung A gemessene Überlappungslänge a, welche den axialen Abstand der Position der Knickstellen 14 und 14' angibt, wobei a mit (1/6)B≤a≤(1/2)B ausgebildet ist. Beispielsweise ist a mit a=(1/3)B ausgebildet.

Beide Rillen 10 und 11 erstrecken sich in der radial äußeren Oberfläche 15 jeweils in axialer Richtung A über eine Erstreckungslänge, die größer ist als (1/2)B.

Die Rillen 10 und 11 sind längs ihrer Erstreckung in Erstreckungsrichtung der Rille 10 bzw. 11 und in radialer Richtung R in ihrem ersten Rillenarm 12 bzw. 12' jeweils mit einer Rillenbreite D₁ und längs ihrer Erstreckung im zweiten Rillenarm 13 bzw. 13' mit einer Breite D₂ ausgebildet, die jeweils im Wesentlichen längs der Erstreckung des jeweiligen Rillenarmes 12, 12', 13 bzw. 13' konstant ist.

Die Breiten D₁ und D₂ sind dabei mit 0,6mm ≤ D₁ ≤ 0,8 mm und 0,6 mm ≤ D₂ ≤ 0,8 mm ausgebildet. Die Breiten D₁ und D₂ sind im dargestellten Ausführungsbeispiel im Wesentlichen gleich groß mit D₁ = D₂ ausgebildet.

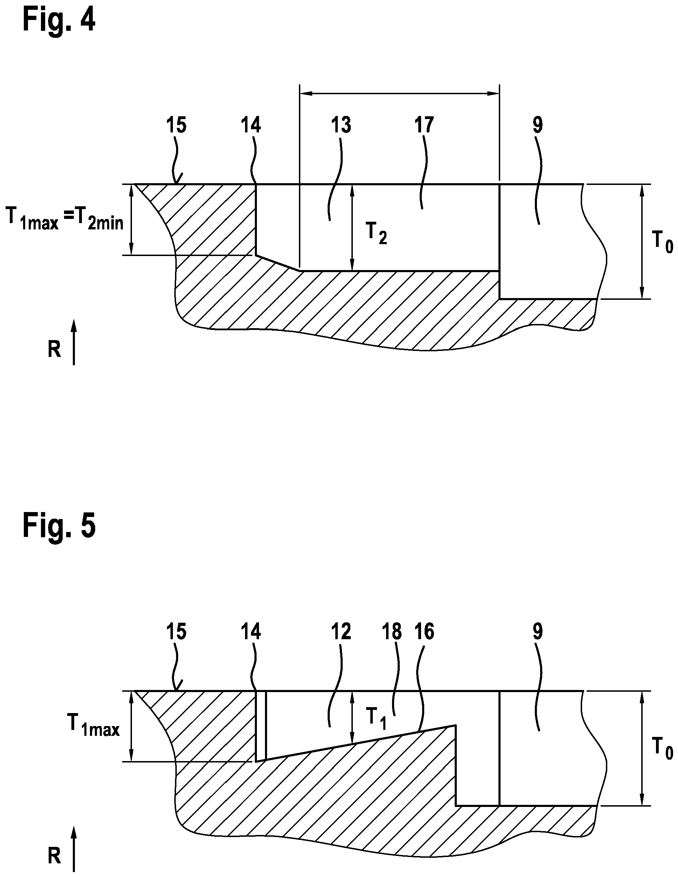

Die Rillen 10 und 11 sind jeweils längs ihrer axialen Erstreckung im Bereich ihres ersten Erstreckungsarmes 12 bzw. 12' bis zur Knickstelle 14 bzw. 14' - wie in Fig. 2, 3 und 5 am Beispiel der Rille 10 dargestellt ist - mit einer Tiefe T₁ und in ihrem zweiten Erstreckungsarm 13 bzw. 13' bis zur Knickstelle 14 bzw. 14' - wie in Fig.2, 3 und 4 am Beispiel der Rille 10 dargestellt ist - mit einer Tiefe T₂ ausgebildet. Dabei ist die Rillentiefe T₁ längs der Erstreckung des ersten Erstreckungsarmes 12 bzw. 12' - wie in Fig.5 dargestellt ist -über ihren wesentlichen Erstreckungsabschnitt bis zur Knickstelle 14 bzw. 14' hin mit kontinuierlich zunehmend ausgebildet, wobei die Tiefe T₁ in der Position der Knickstelle 14 bzw. 14' ihr Maximum mit T₁ₘₐₓ erreicht. Die Rille 10 bzw. 11 ist im Bereich des zweiten Erstreckungsarmes 13 bzw. 13' im Anschluss an die Knickstelle 14 bzw. 14' über einen kurzen Erstreckungsabschnitt von maximal 2 mm Erstreckungslänge ausgehend von einem minimalen Wert T₂ₘᵢₙ = T₁ₘₐₓ in der Knickstelle 14 bzw 14' in Richtung mit zunehmender Tiefe T₂ ausgebildet und im Anschluss daran über den größten Erstreckungsabschnitt des zweiten Rillenarms 13 bzw. 13' hin bis zur Umfangsrille 9 bzw. 8 hin mit konstanter Tiefe T₂.

Somit ist die Tiefe T₂ der Rille 10 im zweiten Erstreckungsabschnitt 13 längs ihrer Erstreckung zwischen Knickstelle 14 und Umfangsrille 9 größer ausgebildet als T₁. Wie in den Figuren 4 und 5 zu erkennen ist, ist dabei T₂max, welche über fast den gesamten Erstreckungsbereichs des zweiten Rillenarms 13 die Tiefe T₂ bildet, kleiner ausgebildet als die in der Umfangsrille 9 ausgebildete Profiltiefe T₀.

Ebenso ist die Tiefe T₂ der Rille 11 im zweiten Erstreckungsabschnitt 13' längs ihrer Erstreckung zwischen Knickstelle 14' und Umfangsrille 8 größer ausgebildet als T₁. Die Tiefe T₂max, welche über fast den gesamten Erstreckungsbereichs des zweiten Rillenarms 13' die Tiefe T₂ bildet, ist kleiner ausgebildet als die in der Umfangsrille 8 ausgebildete Profiltiefe T₀.

In den Figuren ist ein weiteres Ausführungsbeispiel der Rillen 10 und 11 am Beispiel der Rille 11 dargestellt, bei welchem - wie in Fig.5 zu erkennen ist - innerhalb des ersten Rillenarms 12 unmittelbar im Anschluss an die Einmündung des ersten Rillenarms 12 in die Umfangsrille 9 zunächst über einen kurzen Erstreckungsabschnitt von 1 bis 2 mm die Rille 11 mit der Profiltiefe T₀ ausgebildet ist und im Anschluss an eine stufenartige Anhebung des Rippengrundes 16 erst mit der minimalen Tiefe T₁ₘᵢₙ ausgebildet ist, von dem dann der Rillengrund über den größten Teil der Erstreckung des ersten Rillenarmes 12 rampenförmig bis zur maximalen Tiefe T₁ₘₐₓ abgesenkt wird. Die Rillen 11 sind in analoger Weise ausgebildet.

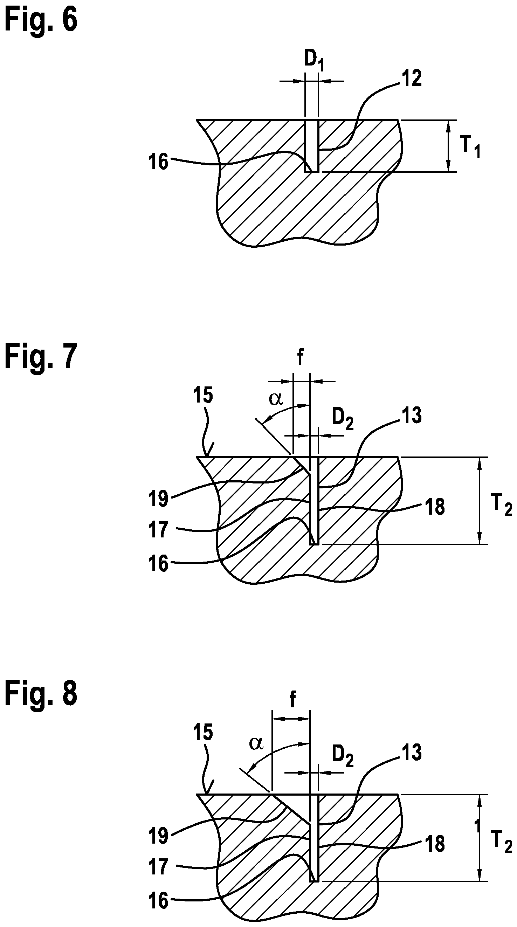

Die Figuren 1, 2 und 6 bis 8 zeigen ein weiteres Ausführungsbeispiel, bei welchem innerhalb des jeweils zweiten Rillenarmes 13 bzw. 13' im Übergang zwischen der längeren Rillenwand 17 und der radial äußeren Oberfläche 15 jeweils eine Fase 19 bekannter Art ausgebildet ist, welche jeweils in den Schnittebenen senkrecht zur Krümmungslinie K₂ gesehen mit einem Winkel α mit α = 45 Grad zur radialen Richtung R ausgebildet ist. Die in den Schnittebenen senkrecht zur Krümmungslinie K₂ gemessene Breite der Fase 19 nimmt dabei längs der Erstreckung des zweiten Rillenarmes 13 bzw. 13' von der Umfangsrille 9 bzw.8 bis zur Knickstelle 14 bzw. 14' hin zu. Dies ist in den Figuren 7, 8 und 2 zu erkennen. Die kürzere Rillenwand 18 der Rillen 10 und 11 sowie die längere Rillenwand 17 im Erstreckungsabschnitt des ersten Rillenarms 12 bzw. 12' ist dabei ohne Fase ausgebildet.

Wie in Fig.1 und Fig.2 zu erkennen ist, sind die Rillen 10 längs der Erstreckung der Umfangsrippe 4 jeweils mit einer in Umfangsrichtung U - in Fig.2 von unten nach oben hin gesehenen - ausgebildeten Abfolge aus zunächst erstem Rillenarm 12, dann Knickstelle 14 und nachfolgend zweitem Rillenarm 13 ausgebildet, und die Rillen 11 sind mit einer Abfolge von zunächst zweitem Rillenarm 13', dann Knickstelle 14' und nachfolgend erstem Rillenarm 12' ausgebildet. Somit ist jeweils einem kürzeren, ersten Rillenarm 12 einer Rille 10 unmittelbar benachbart ein erster kürzerer Rillenarm 12' der nächstliegenden Rille 11 ausgebildet und jedem längeren, zweiten Arm 13 einer Rille 10 ist unmittelbar benachbart der längere Arm 13' der nächstliegenden Rille 11 positioniert ausgebildet.

In der Umfangsrippe 4 sind über den Umfang des Reifens hinweg je nach Reifendimension je 35 bis 44 - beispielsweise 44 - Rillen 10 und 11 ausgebildet.

### Bezugszeichenliste

### (Teil der Beschreibung)

- 1: Profilband
- 2: Profilband
- 3: Profilband
- 4: Umfangsrippe
- 5: Profilband
- 6: Umfangsrille
- 7: Umfangsrille
- 8: Umfangsrille
- 9: Umfangsrille
- 10: Rille
- 11: Rille
- 12: Erster Rillenarm
- 13: Zweiter Rillenarm
- 14: Knickstelle
- 15: Radial äußere Oberfläche
- 16: Rillengrund
- 17: Rillenwand
- 18: Rillenwand
- 19: Fase

## Patentansprüche

1. Laufstreifenprofil eines Fahrzeugluftreifens - insbesondere eines PKW-Fahrzeugluftreifens - mit wenigstens einer Umfangsrippe (4), die in axialer Richtung A von einer ersten (9) und einer zweiten (8) Umfangsrille begrenzt wird, wobei in der Umfangsrippe (4) erste (10) und zweite (11) Rillen ausgebildet sind, die über den Umfang hinweg in Umfangsrichtung U alternierend hintereinander angeordnet sind, wobei die ersten (10) und zweiten (11) Rillen jeweils aus einem ersten (12,12') und zweiten (13,13') Rillenarm ausgebildet sind, die in einer Knickstelle (14,14') der Rille (10,11) miteinander verbunden sind, die im Abstand von beiden Umfangsrillen (9,8) positioniert ist, wobei der erste Rillenarm (12) der ersten Rillen (10) jeweils in axialer Richtung A von der ersten Umfangsrille (9) ausgehend bis zur Knickstelle (14) der ersten Rille (10) und der erste Rillenarm (12') der zweiten Rillen (11) jeweils in axialer Richtung A von der zweiten Umfangsrille (8) ausgehend bis zur Knickstelle (14') der zweiten Rille (11) erstreckt ist,
**dadurch gekennzeichnet,**
**dass** der zweite Rillenarm (13) der ersten Rillen (10) jeweils in axialer Richtung A von der ersten Umfangsrille (9) ausgehend bis zur Knickstelle (14) der ersten Rille (10) und der zweite Rillenarm (13') der zweiten Rillen (11) jeweils in axialer Richtung A von der zweiten Umfangsrille (8) ausgehend bis zur Knickstelle (14') der zweiten Rille (14) erstreckt ist,
**dass** der erste Rillenarm (12) und der zweite Rillenarm (13) der ersten Rille (10) längs ihres Erstreckungsverlaufes von der ersten Umfangsrille (9) zur Knickstelle (14) mit zunehmender Umfangsrichtungskomponente entgegengesetzt zueinander gekrümmt verlaufend ausgebildet sind und dass der erste Rillenarm (12') und der zweite Rillenarm (13') der zweiten Rille (11) längs ihres Erstreckungsverlaufes von der zweiten Umfangsrille (8) zur Knickstelle (14') mit zunehmender Umfangsrichtungskomponente entgegengesetzt zueinander gekrümmt verlaufend ausgebildet sind, und
**dass** die Knickstelle (14) der ersten Rille (10) jeweils in einer axialen Position zwischen Knickstelle (14') der zweiten Rillen (11) und zweiter Umfangsrille (8) und die Knickstelle (14') der zweiten Rille (11) jeweils in einer axialen Position zwischen Knickstelle (14) der ersten Rillen (10) und erster Umfangsrille (9) angeordnet ist.

2. Laufstreifenprofil gemäß den Merkmalen von Anspruch 1,
wobei die Knickstelle (14) der ersten Rille (10) in der radial äußeren Oberfläche (15) der Umfangsrippe (4) axial zwischen der zweiten Umfangsrille (8) und der in axialer Richtung A gemessenen Breitenmitte der Umfangrippe (4) positioniert ist und wobei die Knickstelle (14') der zweiten Rille (11) in der radial äußeren Oberfläche (15) der Umfangsrippe (4) axial zwischen der ersten Umfangsrille (9) und der in axialer Richtung A gemessenen Breitenmitte der Umfangrippe (4) positioniert ist.

3. Laufstreifenprofil gemäß den Merkmalen von Anspruch 1 oder 2,
wobei der erste Rillenarm (12, 12') einer Rille (10, 11) jeweils mit einer Länge L₁ und der zweite Rillenarm (13, 13') der Rille (10, 11) mit einer Länge L₂ mit L₁ < L₂ ausgebildet ist, wobei die Längen L₁ und L₂ jeweils den an der längeren Rillenwand (17) der Rille (10, 11) in der radial äußeren Oberfläche (15) der Umfangsrippe (4) gemessenen Abstand zwischen Knickstelle (14, 14') und Einmündung des Rillenarms (12, 12', 13, 13') in die jeweilige Umfangsrille (8, 9) angibt.

4. Laufstreifenprofil gemäß den Merkmalen von Anspruch 3,
wobei in Umfangsrichtung U gesehen die ersten Rillen (10) jeweils aus einem ihrer Knickstelle (14) vorgeordneten, ersten Rillenarm (12) und einem ihrer Knickstelle (14) nachgeordneten, zweiten Rillenarm (13) und die zweiten Rillen (11) mit entgegengesetzter Abfolge mit einem ihrer Knickstelle (14') vorgeordneten, zweiten Rillenarm (13') und einem ihrer Knickstelle (14') nachgeordneten, ersten Rillenarm (12') ausgebildet sind.

5. Laufstreifenprofil gemäß den Merkmalen von einem der vorangegangenen Ansprüche,
wobei der erste (12, 12') und der zweite (13, 13') Rillenarm einer Rille (10, 11) jeweils mit unterschiedlicher Tiefe ausgebildet sind.

6. Laufstreifenprofil gemäß den Merkmalen von Anspruch 3 oder 4,
wobei der erste Rillenarm (12, 12') einer Rille (10, 11) jeweils über den Hauptteil seiner axialen Erstreckung bis zur Knickstelle (14, 14') mit einer Tiefe T₁ und der zweite Rillenarm (13, 13') längs seiner Erstreckung mit einer Tiefe T₂ mit T₁<T₂ ausgebildet ist.

7. Laufstreifenprofil gemäß den Merkmalen von Anspruch 6,
wobei der die Rille (10, 11) nach radial innen begrenzende Rillengrund (16) im ersten Rillenarm (12, 12') längs ihrer axialen Erstreckung bis zur Knickstelle (14, 14') rampenförmig abfällt, wobei die Tiefe T₁ bis zur Knickstelle (14, 14') hin kontinuierlich zunimmt.

8. Laufstreifenprofil gemäß den Merkmalen von Anspruch 6 oder 7,
wobei die Tiefe T₂ zumindest über den größten Teil der Erstreckung des zweiten Rillenarms (13, 13') konstant ist.

9. Laufstreifenprofil gemäß den Merkmalen von einem oder mehreren der vorangegangenen Ansprüche,
wobei die Knickstellen (14) der ersten Rillen (10) in einem in axialer Richtung A gemessenen Abstand a von den Knickstellen (14') der zweiten Rillen (11) positioniert sind mit (1/6)B≤a≤(1/2)B, wobei B die in axialer Richtung A gemessene Breite der Umfangsrippe (4) ist.

10. Laufstreifenprofil gemäß den Merkmalen von einem oder mehreren der vorangegangenen Ansprüche,
wobei die kürzere Rillenwand (18) des zweiten Rillenarmes (13, 13') einer Rille (10, 11) jeweils im Übergang zur radial äußeren Oberfläche (15) mit einer Fase (19) ausgebildet ist und
wobei insbesondere sowohl die kürzere Rillenwand (18) des ersten Rillenarmes (12, 12') einer Rille (10, 11) als auch die längere Rillenwand (17) in beiden Rillenarmen (12, 13, 12', 13') der Rille (10, 11) im Übergang zur radial äußeren Oberfläche (15) jeweils ohne Fase ausgebildet sind.

## Claims

1. Tread profile of a pneumatic vehicle tyre - in particular a pneumatic car tyre - with at least one circumferential rib (4), which is delimited in the axial direction A by a first (9) and a second (8) circumferential groove, wherein first (10) and second (11) grooves that are arranged over the circumference alternately one behind the other in the circumferential direction U are formed in the circumferential rib (4), wherein the first (10) and second (11) grooves are respectively formed from a first (12, 12') and a second (13, 13') groove arm, which are connected to one another at a vertex point (14, 14') of the groove (10, 11) which is positioned at a distance from the two circumferential grooves (9, 8), wherein the first groove arm (12) of the first grooves (10) is respectively made to extend in the axial direction A from the first circumferential groove (9) to the vertex point (14) of the first groove (10) and the first groove arm (12') of the second grooves (11) is respectively made to extend in the axial direction A from the second circumferential groove (8) to the vertex point (14') of the second groove (11),
**characterized**
**in that** the second groove arm (13) of the first grooves (10) is respectively made to extend in the axial direction A from the first circumferential groove (9) to the vertex point (14) of the first groove (10) and the second groove arm (13') of the second grooves (11) is respectively made to extend in the axial direction A from the second circumferential groove (8) to the vertex point (14') of the second groove (14),
**in that** the first groove arm (12) and the second groove arm (13) of the first groove (10) are formed along the course of their extent from the first circumferential groove (9) to the vertex point (14) in such a way that they run with an increasing circumferential direction component curved oppositely in relation to one another and in that the first groove arm (12') and the second groove arm (13') of the second groove (11) are formed along the course of their extent from the second circumferential groove (8) to the vertex point (14') in such a way that they run with an increasing circumferential direction component curved oppositely in relation to one another, and
**in that** the vertex point (14) of the first groove (10) is respectively arranged in an axial position between the vertex point (14') of the second grooves (11) and the second circumferential groove (8) and the vertex point (14') of the second groove (11) is respectively arranged in an axial position between the vertex point (14) of the first grooves (10) and the first circumferential groove (9).

2. Tread profile according to the features of Claim 1, wherein the vertex point (14) of the first groove (10) in the radially outer surface (15) of the circumferential rib (4) is positioned axially between the second circumferential groove (8) and the middle of the width of the circumferential rib (4), measured in the axial direction A, and wherein the vertex point (14') of the second groove (11) in the radially outer surface (15) of the circumferential rib (4) is positioned axially between the first circumferential groove (9) and the middle of the width of the circumferential rib (4), measured in the axial direction A.

3. Tread profile according to the features of Claim 1 or 2,
wherein the first groove arm (12, 12') of a groove (10, 11) is respectively formed with a length L₁ and the second groove arm (13, 13') of the groove (10, 11) is respectively formed with a length L₂, where L₁ < L₂, wherein the lengths L₁ and L₂ respectively indicate the distance, measured on the longer groove wall (17) of the groove (10, 11) in the radially outer surface (15) of the circumferential rib (4), between the vertex point (14, 14') and the opening of the groove arm (12, 12', 13, 13') into the respective circumferential groove (8, 9).

4. Tread profile according to the features of Claim 3,
wherein, seen in the circumferential direction U, the first grooves (10) are respectively formed by a first groove arm (12), arranged ahead of their vertex point (14), and a second groove arm (13), arranged after their vertex point (14), and the second grooves (11) are formed with an opposite sequence, with a second groove arm (13'), arranged ahead of their vertex point (14'), and a first groove arm (12'), arranged after their vertex point (14').

5. Tread profile according to the features of one of the preceding claims,
wherein the first (12, 12') and the second (13, 13') groove arm of a groove (10, 11) are respectively formed with different depths.

6. Tread profile according to the features of Claim 3 or 4,
wherein the first groove arm (12, 12') of a groove (10, 11) is respectively formed over the main part of its axial extent up to the vertex point (14, 14') with a depth T₁ and the second groove arm (13, 13') is formed over its extent with a depth T₂, where T₁ < T₂.

7. Tread profile according to the features of Claim 6,
wherein the groove base (16) delimiting the groove (10, 11) radially inwards slopes down in the form of a ramp in the first groove arm (12, 12') along its axial extent up to the vertex point (14, 14'), wherein the depth T₁ increases continuously up to the vertex point (14, 14').

8. Tread profile according to the features of Claim 6 or 7,
wherein the depth T₂ is constant, at least over the greatest part of the extent of the second groove arm (13, 13').

9. Tread profile according to the features of one or more of the preceding claims,
wherein the vertex points (14) of the first grooves (10) are positioned at a distance a, measured in the axial direction A, from the vertex points (14') of the second grooves (11), where (1/6)B ≤ a ≤ (1/2)B, wherein B is the width of the circumferential rib (4) measured in the axial direction A.

10. Tread profile according to the features of one or more of the preceding claims,
wherein the shorter groove wall (18) of the second groove arm (13, 13') of a groove (10, 11) is respectively formed with a bevel (19) at the transition to the radially outer surface (15) and
wherein in particular both the shorter groove wall (18) of the first groove arm (12, 12') of a groove (10, 11) and the longer groove wall (17) in both groove arms (12, 13, 12', 13') of the groove (10, 11) are respectively formed without a bevel at the transition to the radially outer surface (15).

## Revendications

1. Profil de bande de roulement d'un pneumatique de véhicule, en particulier d'un pneumatique de véhicule léger, comprenant au moins une nervure périphérique (4) qui est limitée dans la direction axiale A par une première (9) et une deuxième (8) rainure périphérique, des première (10) et deuxième (11) rainures étant réalisées dans la nervure périphérique (4), lesquelles sont disposées les unes derrière les autres en alternance dans la direction périphérique U au-delà de la périphérie, les première (10) et deuxième (11) rainures étant à chaque fois réalisées à partir d'un premier (12, 12') et d'un deuxième (13, 13') bras de rainure qui sont connectés l'un à l'autre au niveau d'un point d'inflexion (14, 14') de la rainure (10, 11) qui est positionné à distance des deux rainures périphériques (9, 8), le premier bras de rainure (12) des premières rainures (10) s'étendant à chaque fois dans la direction axiale A depuis la première rainure périphérique (9) jusqu'au point d'inflexion (14) de la première rainure (10) et le premier bras de rainure (12') des deuxièmes rainures (11) s'étendant à chaque fois dans la direction axiale A depuis la deuxième rainure périphérique (8) jusqu'au point d'inflexion (14') de la deuxième rainure (11),
**caractérisé en ce que** le deuxième bras de rainure (13) des premières rainures (10) s'étend à chaque fois dans la direction axiale A depuis la première rainure périphérique (9) jusqu'au point d'inflexion (14) de la première rainure (10) et le deuxième bras de rainure (13') des deuxièmes rainures (11) s'étend à chaque fois dans la direction axiale (A) depuis la deuxième rainure périphérique (8) jusqu'au point d'inflexion (14') de la deuxième rainure (14),
**en ce que** le premier bras de rainure (12) et le deuxième bras de rainure (13) de la première rainure (10) sont réalisés de manière à s'étendre sous forme courbe à l'opposé l'un de l'autre le long de leur trajectoire d'étendue depuis la première rainure périphérique (9) jusqu'au point d'inflexion (14) avec une composante directionnelle périphérique croissante et **en ce que** le premier bras de rainure (12') et le deuxième bras de rainure (13') de la deuxième rainure (11) sont réalisés de manière à s'étendre sous forme courbe à l'opposé l'un de l'autre le long de leur trajectoire d'étendue depuis la deuxième rainure périphérique (8) jusqu'au point d'inflexion (14') avec une composante directionnelle périphérique croissante, et
**en ce que** le point d'inflexion (14) de la première rainure (10) est à chaque fois disposé dans une position axiale entre le point d'inflexion (14') des deuxièmes rainures (11) et la deuxième rainure périphérique (8) et le point d'inflexion (14') de la deuxième rainure (11) est à chaque fois disposé dans une position axiale entre le point d'inflexion (14) des premières rainures (10) et la première rainure périphérique (9).

2. Profil de bande de roulement selon les caractéristiques de la revendication 1,
dans lequel le point d'inflexion (14) de la première rainure (10) dans la surface radialement extérieure (15) de la nervure périphérique (4) est positionné axialement entre la deuxième rainure périphérique (8) et le milieu de la largeur de la nervure périphérique (4), mesuré dans la direction axiale A, et dans lequel le point d'inflexion (14') de la deuxième rainure (11) dans la surface radialement extérieure (15) de la nervure périphérique (4) est positionné axialement entre la première rainure périphérique (9) et le milieu de la largeur de la nervure périphérique (4), mesuré dans la direction axiale A.

3. Profil de bande de roulement selon les caractéristiques de la revendication 1 ou 2,
dans lequel le premier bras de rainure (12, 12') d'une rainure (10, 11) est à chaque fois réalisé avec une longueur L₁ et le deuxième bras de rainure (13, 13') de la rainure (10, 11) est réalisé avec une longueur L₂, avec L₁ < L₂, les longueurs L₁ et L₂ indiquant à chaque fois la distance entre le point d'inflexion (14, 14') et l'embouchure du bras de rainure (12, 12', 13, 13') dans la rainure périphérique respective (8, 9), mesurée au niveau de la paroi de rainure plus longue (17) de la rainure (10, 11) dans la surface radialement extérieure (15) de la nervure périphérique (4).

4. Profil de bande de roulement selon les caractéristiques de la revendication 3,
dans lequel, vu dans la direction périphérique U, les premières rainures (10) sont réalisées à chaque fois à partir d'un premier bras de rainure (12) placé en amont de leur point d'inflexion (14) et d'un deuxième bras de rainure (13) placé en aval de leur point d'inflexion (14), et les deuxièmes rainures (11) sont réalisées dans une séquence opposée, avec un deuxième bras de rainure (13') placé en amont de leur point d'inflexion (14') et un premier bras de rainure (12') placé en aval de leur point d'inflexion (14').

5. Profil de bande de roulement selon les caractéristiques de l'une quelconque des revendications précédentes,
dans lequel le premier (12, 12') et le deuxième (13, 13') bras de rainure d'une rainure (10, 11) sont à chaque fois réalisés avec une profondeur différente.

6. Profil de bande de roulement selon les caractéristiques de la revendication 3 ou 4,
dans lequel le premier bras de rainure (12, 12') d'une rainure (10, 11) est réalisé à chaque fois sur la partie principale de son étendue axiale jusqu'au point d'inflexion (14, 14') avec une profondeur T₁ et le deuxième bras de rainure (13, 13') est réalisé le long de son étendue avec une profondeur T₂, avec T₁ < T₂.

7. Profil de bande de roulement selon les caractéristiques de la revendication 6,
dans lequel le fond de rainure (16) limitant radialement vers l'intérieur la rainure (10, 11) descend en forme de rampe dans le premier bras de rainure (12, 12') le long de son étendue axiale jusqu'au point d'inflexion (14, 14'), la profondeur T₁ augmentant en continu jusqu'au point d'inflexion (14, 14').

8. Profil de bande de roulement selon les caractéristiques de la revendication 6 ou 7,
dans lequel la profondeur T₂ est constante au moins sur la majeure partie de l'étendue du deuxième bras de rainure (13, 13').

9. Profil de bande de roulement selon les caractéristiques d'une ou plusieurs des revendications précédentes,
dans lequel les points d'inflexion (14) des premières rainures (10) sont positionnés à une distance a, mesurée dans la direction axiale A, des points d'inflexion (14') des deuxièmes rainures (11), avec (1/6)B ≤ a ≤ (1/2)B, B étant la largeur de la nervure périphérique (4) mesurée dans la direction axiale A.

10. Profil de bande de roulement selon les caractéristiques d'une ou plusieurs des revendications précédentes,
dans lequel la paroi de rainure plus courte (18) du deuxième bras de rainure (13, 13') d'une rainure (10, 11) est à chaque fois réalisée dans la transition à la surface radialement extérieure (15) avec un biseau (19), et
dans lequel notamment à la fois la paroi de rainure plus courte (18) du premier bras de rainure (12, 12') d'une rainure (10, 11) ainsi que la paroi de rainure plus longue (17) dans les deux bras de rainure (12, 13, 12', 13') de la rainure (10, 11) dans la transition à la surface radialement extérieure (15) sont à chaque fois réalisées sans biseau.
